# EUROPEAN PATENT SPECIFICATION

(11) **EP 3 842 292 B1**
(45) Date of publication and mention of the grant of the patent: **31.08.2022**
(21) Application number: 20020652.2
(22) Date of filing: 23.12.2020
(51) Int. Cl.: B60R 19/48, B60R 19/52, H01Q 1/02

(54) **PROTECTIVE ELEMENT FOR A RADIATION EMITTING OR RECEIVING VEHICLE SENSOR AND ASSOCIATED METHOD**
SCHUTZELEMENT FÜR FAHRZEUGSENSOR FÜR SENDEN ODER EMPFANGEN VON STRAHLUNG UND ZUGEHÖRIGE METHOD
ÉLÉMENT DE PROTECTION POUR ÉMETTEUR DE VÉHICULE ENVOYANT OU RECEVANT DES RAYONNEMENTS ET PROCÉDÉ ASSOCIÉ

(30) Priority: 23.12.2019 IT 201900025396
(43) Date of publication of application: 30.06.2021
(73) Proprietor: Marelli Automotive Lighting Italy S.p.A. Con Socio Unico, 10078 Venaria Reale (TO) (IT)
(72) Inventor: Falessi, Alessandro, 10078 Venaria Reale (TO) (IT)
(74) Representative: Plebani, Rinaldo

(56) References cited:
- EP-A1- 3 252 494
- EP-A1- 3 514 567
- DE-A1- 10 156 699
- DE-A1- 19 963 004
- DE-A1-102012 105 564
- DE-A1-102015 218 876
- JP-A- 2007 013 722

## Description

### Cross-Reference to Related Applications

This Patent Application claims priority from Italian Patent Application No. 102019000025396 filed on December 23, 2019.

### Technical field of the invention

This invention refers to a protective element for a radiation emitting or receiving sensor installed in a vehicle, such as a radar or camera installed on a front or rear vehicle body part, typically but not exclusively on a bumper. The protective element to which this invention relates is known in the technical jargon as "radome", from the contraction of the English words "radar" and "dome". The invention also relates to an associated method.

### Prior Art

Modern vehicles are increasingly frequently equipped with sensors that emit or receive radiation, whether optical or radiofrequency, such as cameras or radars. The document EP3252494A1 discloses a protective element according to the preamble of claim 1.

These sensors, generally installed on, or under and behind, the bumper, typically the front one, must, on the one hand, be protected from accidental collisions and direct splashes of external contaminants, such as water or mud, and, on the other hand, not be hindered in their operational function.

These conflicting requirements are not fully met at the moment, as the protection of the sensor is entrusted to additional vehicle body elements, such as protective grilles or frames. Moreover, even when sufficient protective action is obtained, to the merely partial detriment of sensor efficiency, the sensor remains exposed to cold and therefore, in winter, to potential icing on the sensor and/or the protective element, which alters the sensor action, or renders it ineffective. EP3252494 *does not solve the problem.*

The purpose of this invention is to provide a protective element and an associated method for protecting a radiation emitting or receiving sensor installed in a vehicle, e.g. a radar or camera installed on a front or rear vehicle body part, such as a bumper, without the drawbacks of the prior art. The element and method are able to effectively protect the sensor without altering or hindering its action, even in winter and when there is ice, are, at the same time, easy and inexpensive to produce and install, and make it possible to create a protective element that can be fully integrated with the aesthetic appearance of the vehicle on which it is mounted.

According to the invention, therefore, a protective element for a radiation emitting or receiving sensor installed in a vehicle is provided, such as a radar or camera installed on a front or rear vehicle body part, typically but not exclusively on a bumper, as well as an associated method, having the features set out in the appended claims.

### Brief description of the drawings

Further features and advantages of this invention will be more apparent from the following description of a non-limiting embodiment thereof, which is provided with reference to the figures in the attached drawings, wherein:
- Figure 1 schematically illustrates an exploded, three-quarter front perspective view of a protective element for a vehicle sensor made according to the invention, a detail of which is also illustrated in an enlarged cross-section; and
- Figure 2 schematically illustrates the steps of a method for manufacturing the protective element in Figure 1.

### Detailed description

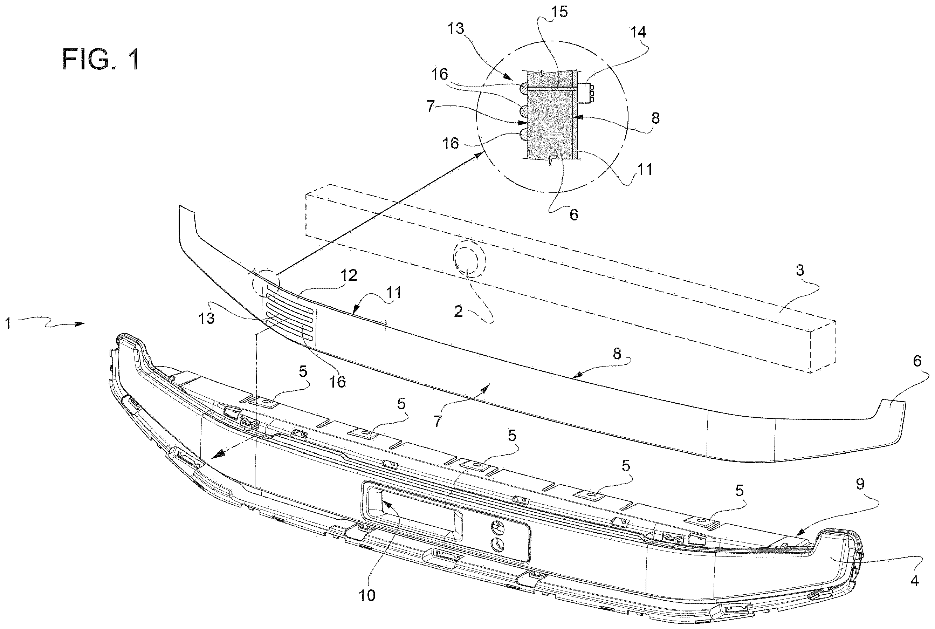

With reference to Figure 1, here, the reference number 1 indicates a protective element for a radiation emitting or receiving sensor 2 installed on a vehicle, for example a radar or camera installed on a front or rear vehicle body part 3, which is only illustrated schematically in dashes, as is the sensor 2. The vehicle can be of any kind and, for the sake of simplicity, is not illustrated.

The protective element 1 comprises a support 4 configured to be fixed to the vehicle body part 3 in front of the radiation emitting or receiving sensor 2.

For this purpose, the support 4 includes a series of fastening elements or devices 5, known and only schematically illustrated, which typically consist of quick-release tabs or hooks and/or of holes, wings or ears for receiving fastening screws, not illustrated for simplicity.

According to a first aspect of the invention, the support 4 is made entirely of a transparent synthetic plastic material, or, in any case, material pervious to optical radiation (e.g. light) or to radiofrequency, such as radar waves. The support 4 is made, as will be seen, by injection moulding or compression moulding with a synthetic plastic material that is preferably rigid, but still equipped with a certain elasticity, for example polycarbonate, polyethylene, plexiglass, etc.

The protective element 1 also comprises a transparent film 6 delimited by a first face 7 and by a second face 8, opposite the first face 7.

According to one aspect of the invention, the transparent film 6 is integrally fixed to a first face 9 of the support 4 facing, in use, the emitting or receiving sensor 2, i.e. towards the vehicle interior.

Compared to the vehicle body part or element 3, the face 9 is an inner face of the support 4, which is preferably cup- or half shell-shaped, so as to provide it with a certain structural stiffness.

The first face 7 of the transparent film 6, instead, faces the support 4 and, therefore, the outside of the vehicle and, in use, on the side opposite to the sensor 2 and the vehicle body part or element 3.

The face 7 is, in addition, arranged to adhere in contact with the first face 9 of the support, to which it is arranged in parallel, covering the same and copying its shape.

Both the support 4 and the transparent film 6 can be provided with holes and other service openings and, therefore, can be continuous or non-continuous. In the non-limiting example illustrated, the support 4 has a through opening or window 10, arranged far apart from the sensor 2.

According to one aspect of the invention, the second face 8 of the transparent film 6 is lined at least partially with a decorating layer 11 permanently applied to the same surface 8, so that it adheres to it.

According to another aspect of the invention, in addition, at least one first portion 12 of the first face 7 of the transparent film 6, which is always left free of the decorating layer 11, is configured to be, in use, facing the emitting or receiving sensor 2 and is provided with an electric resistance 13 formed on the face 7, integral rigid with the face 7, and in correspondence with the portion 12 thereof.

The decorating layer 11 is applied to the second face 8 of the transparent film 6 in a continuous or discontinuous manner, i.e. it can line all or only part of the face 8, for example, leaving some selected sections of it uncovered.

The decorating layer 11 applied to the second face 8 of the transparent film 6 is generally monochrome and is preferably configured to match the vehicle body part 3 on which the protective element 1, known in the technical jargon as a radome, is intended to be coupled.

According to a possible variant, the decorating layer 11 applied to the second face 8 of the transparent film 6, is polychromatic, and/or includes drawings, writing, or logos, which are made so that they can be read through the face 7 and, as a result, through the support 4 as well.

The second face 8 of the transparent film 6 is also provided, near the first portion 12 of the first face 7 of the transparent film 6, with at least one electric connection element 14, of any known type, electrically and mechanically connected to the electric resistance 13 by means of at least one shunt 15 that passes through the transparent film 6.

The at least one electric connection element 14 is integrally fixed against the second face 8 of the transparent film 6, on the side of the electric resistance 13 and, therefore, laterally to the portion 12 of the face 8, by gluing or ultrasonic welding, or with any other appropriate technique or procedure, even with screws or rivets, if necessary.

The at least one electric connection element 14 is integrally fixed against the second face 8 of the transparent film 6 with the interposition of the decorating layer 11. In any case, the decorating layer 11 is created before mounting the electric connection element 14

The electric resistance 13 extends so that it covers the whole or part of the portion 12 of the first face 7 of the transparent film 6, in a continuous or non-continuous way, and is chosen from the group consisting of: filaments 16 (Figure 1, enlarged square) made of a metal conductor, preferably copper or an alloy thereof, deposited directly on the first face 7 of the transparent film 6 according to a serpentine (as illustrated in a non-limiting way), grill, or comb pattern, or according to other patterns or arrangements believed appropriate; a continuous or non-continuous ITO layer (tin doped indium oxide, notoriously transparent); or a combination thereof. Any other type of electric resistance is also adapted to the purpose, as long as its perviousness to light or radiofrequency is preserved on the part of the portion 12 of the face 7, which, in use, is in front of the sensor 2.

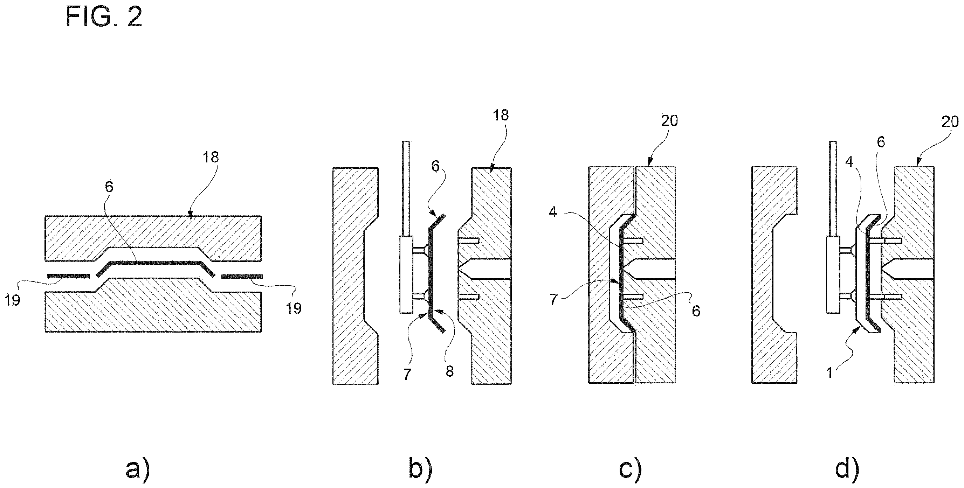

From what has been described above, and with reference to Figure 2, it is also clear that the invention refers to a method for protecting a radiation emitting or receiving sensor 2 installed on a vehicle, for example a radar or a camera installed at a front or rear vehicle body part 3, comprising the following steps:
A first step for creating (in a known way) a transparent film 6 in a synthetic plastic material, preferably polycarbonate, in the shape of a sheet or tape; this transparent film 6 preferably has a thickness ranging between 0.2 and 0.4 mm so as to be highly flexible and deformable.
A second step for applying an electric resistance 13, on at least one first portion 12 of a first face 7 of the transparent film, by metal deposition or by silkscreen or by glue, so that the electric resistance 13 becomes an integral part of the transparent film 6.
A third step for applying on a second face 8 of the transparent film 6 a continuous or non-continuous decorating layer 11, whether monochrome or polychromatic, with any writing or logos that can be read through the transparent film 6. This third step can be performed either before or after the second step, but always so as not to cover with the decorating layer lithe portion 12, since this latter must remain transparent.

It should be noted that the numeral adjectives "first", "second", etc. as used here, are not to be understood as indicating a temporal or functional sequence, but, simply, as attributes to succinctly distinguish the various steps.

A fourth step for preforming the transparent film 6, for example with heat (thermoforming), in a first mould 18 (Figure 2a), so as to eliminate the unnecessary peripheral parts 19. At this point, the film 6 is no longer, generally, completely transparent, since it has already received the decorating layer 11, on the face 8 thereof.

During this thermoforming step (Figure 2b), wherein an at least partial reticulation of the polymer with which the film 6 is made is obtained, the film 6 is given a final, pre-set shape, for example profiled and cup-shaped (Figure 2b), configured to continuously couple with the front or rear vehicle body part 3. In this step, the film 6 also acquires a certain stiffness and its own shape.

A fifth step for co-moulding a support 4 made of transparent synthetic plastic material or, in any case, material pervious to optical radiation or to radiofrequency, in a second mould 20 (Figure 2c) on the first face 7 of the transparent film 6, so as to give the support 4 a shape matching that of the preformed transparent film 6 and so as to create, on the support 4, fastening elements for the vehicle, such as the elements or devices 5 already described. At the end of this step (Figure 2d), the almost finished protective element 1 is obtained.

In a sixth step (not illustrated), to be carried out prior to or after the preforming and/or co-moulding steps, at least one electric connection element 14 for the electric resistance 13 is integrally fixed to the second face 8 of the transparent film 6, the connection element being electrically and mechanically connected to the resistance by means of a shunt 15 passing through the transparent film 6.

Finally, in a seventh and final step, the protective element 1 thus obtained is assembled integrally with the vehicle body part 3 by means of elements 5, arranging the transparent portion 12 in front of / facing the sensor 2, arranged at a prefixed and relatively small distance from the same.

During this seventh step, the protective element 1 is applied so that it extends for the whole length of the vehicle body part 3 and forms a stylistic and functional extension thereof , without solution of continuity.

Finally, it is clear from the description that the invention also extends to a vehicle (known and not illustrated) comprising a protective element 1 as described for the radiation emitting or receiving sensor 2, preferably applied to a front or rear bumper 3 for its entire length measured in a direction that is transverse to the vehicle.

Thanks to the structure described, the protective element 1 is easy and economical to make and to assembly in a position facing the sensor 2 to be protected. It provides the sensor 2 with complete protection, since it acts as a screen for the sensor, but, at the same time, does not hinder its operation, since it is sufficient for this purpose that the portion 12 of the face 7 is large enough. Finally, even in cold weather with danger of ice formation, this cannot cover the portion 12 of the face 7, hindering the operation of the sensor 2, because it is promptly melted (or even prevented from forming) by the electric resistance 13.

All the purposes of the invention are, therefore, achieved.

## Claims

1. A protective element (1) for a radiation emitting or receiving sensor (2) installed on a vehicle, for example a radar or a camera installed at a front or rear vehicle body part (3), comprising a support (4) configured to be fixed to said vehicle body part (3) in front of the emitting or receiving sensor (2); wherein, in combination:
i)- the support (4) is made entirely of a transparent synthetic plastic material or however of a material pervious to optical radiation or to radio frequency
ii)- the protective element also comprises a transparent film (6) delimited by a first face (7) and by a second face (8), opposite to the first face, the transparent film (6) being fixed entirely integral to a first face (9) of the support (4) facing, in use, the emitting or receiving sensor (2);
iii)- the first face (7) of the transparent film (6) facing towards the support (4) and being arranged to adhere in contact with the first face (9) of the support;
iv)- the second face (8) of the transparent film being lined at least partially by a decorating layer (11) applied in a permanent manner thereon; and
v)- at least a first portion (12) of the first face (7) of the transparent film (6), configured to be arranged, in use, facing the emitting or receiving sensor (2), is provided with an electric resistance (13) that is entirely integrally formed thereon; **characterised in that**
vi)- the second face (8) of the transparent film is provided, at the first portion (12) of the first face (7) of the transparent film, with at least an electric connection element (14) electrically and mechanically connected to said electric resistance (13), preferably by means of at least one shunt (15) that passes through said transparent film;
vii)- said at least one electric connection element (14) is integrally fixed against the second face (8) of the transparent film (6) with the interposition of said decorating layer (11).

2. The protective element according to claim 1, **characterised in that** the decorating layer (11) is applied on the second face (8) of the transparent film in a continuous or non-continuous manner.

3. The protective element according to claim 1 or 2, **characterised in that** the decorating layer (11), applied on the second face of the transparent film, is monochrome and is preferably configured to match the colour of the vehicle body part (3).

4. The protective element according to claim 1 or 2, **characterised in that** the decorating layer (11), applied on the second face of the transparent film, is polychromatic and/or includes designs, writing or logos.

5. The protective element according to one of the preceding claims, **characterised in that** said at least one electric connection element (14) is fixed on the side of said electric resistance (13) and therefore laterally to the first portion (12), by gluing or ultrasonic welding or with another appropriate process.

6. The protective element according to one of the preceding claims, **characterised in that** said electric resistance (13) extends to cover all or part of said first portion (12) of the first face (7) of the transparent film, the electric resistance (13) being chosen from the group consisting of: filaments (16) made of a metal conductor, preferably copper or alloys thereof, deposited directly on the first face of the transparent film according to a serpentine, grill or comb pattern; a continuous or non-continuous layer of ITO; combinations thereof.

7. A method for protecting a radiation emitting or receiving sensor (2) installed on a vehicle, for example a radar or a camera installed at a front or rear vehicle body part (3), **characterised in that** it comprises the following steps:
a)- producing a transparent film (6) made of synthetic plastic material, preferably polycarbonate, in the shape of a sheet or web;
b)- applying, on at least a first portion (12) of a first face (7) of the transparent film, an electric resistance (13) by metal deposition or by silkscreen or by glue, so that the electric resistance becomes an integral part of the transparent film;
c)- applying, on a second face (8) of the transparent film, a continuous or non-continuous, monochromatic or polychromatic decorating layer (11), with possible writing or logos readable through the transparent film;
d)- preforming the transparent film (6) in a first mould (18), so as to eliminate unnecessary peripheral parts (19) thereof, and to impart a pre-set shape thereto configured to continuously couple with said front or rear vehicle body part;
e)- co-moulding, in a second mould (20) and on the first face (7) of the transparent film, a support (4) made of a transparent synthetic plastic material or a material pervious to optical radiation or to radiofrequency, so as to impart to the support (4) a shape matching that of the preformed transparent film (6) and so as to produce on the support (4) fastening elements (5) to the vehicle;
f)- prior to or after the preforming and/or co-moulding steps, integrally fixing to the second face (8) of the transparent film (6) at least an electric connection element (14) to said electric resistance, electrically and mechanically connected to the latter;
g)- assembling the protective element (1) according to claim 1 thus obtained on the vehicle body part (3) integrally thereof, arranging the first transparent portion (12) in front of /facing said sensor (2)

8. A vehicle comprising a protective element (1) for a radiation emitting or receiving sensor (2) according to one of the claims from 1 to 6, preferably applied to a front or rear bumper (3) for the entire length of the same measured in a direction transversal to the vehicle.

## Patentansprüche

1. Schutzelement (1) für einen an einem Fahrzeug installierten Strahlung aussendenden oder empfangenden Sensor (2), beispielsweise ein Radar oder eine Kamera, die an einem vorderen oder hinteren Fahrzeugkarosserieteil (3) installiert sind, einen Träger (4) umfassend, der dazu konfiguriert ist, an dem Fahrzeugkarosserieteil (3) vor dem Strahlung aussendenden oder empfangenden Sensor (2) befestigt zu werden; wobei in Kombination:
i)- der Träger (4) vollständig aus einem transparenten synthetischen Kunststoffmaterial oder aber aus einem für optische Strahlung oder Hochfrequenzstrahlung durchlässigen Material hergestellt ist;
ii)- das Schutzelement ferner eine transparente Folie (6) umfasst, die durch eine erste Fläche (7) und eine der ersten Fläche gegenüberliegende zweite Fläche (8) begrenzt ist, wobei die transparente Folie (6) vollständig integriert an einer ersten Fläche (9) des Trägers (4) befestigt ist, die im Gebrauch dem sendenden oder empfangenden Sensor (2) zugewandt ist;
iii)- die erste Fläche (7) der transparenten Folie (6) dem Träger (4) zugewandt ist und so angeordnet ist, dass sie in Kontakt mit der ersten Fläche (9) des Trägers haftet;
iv)- wobei die zweite Fläche (8) der transparenten Folie wenigstens teilweise von einer dauerhaft darauf aufgebrachten Dekorationsschicht (11) bedeckt ist; und
v)- wenigstens ein erster Abschnitt (12) der ersten Fläche (7) der transparenten Folie (6), der dazu konfiguriert ist, im Gebrauch dem sendenden oder empfangenden Sensor (2) zugewandt angeordnet zu sein, mit einem elektrischen Widerstand (13) versehen ist, der darauf vollständig integriert ausgebildet ist; **dadurch gekennzeichnet, dass**
vi)- die zweite Fläche (8) der transparenten Folie am ersten Abschnitt (12) der ersten Fläche (7) der transparenten Folie mit wenigstens einem elektrischen Verbindungselement (14) versehen ist, das elektrisch und mechanisch mit dem elektrischen Widerstand (13) verbunden ist, vorzugsweise mittels wenigstens eines Nebenschlusses (15), der durch die transparente Folie verläuft;
vii)- das wenigstens eine elektrische Verbindungselement (14) an der zweiten Fläche (8) der transparenten Folie (6) mit dazwischenliegender Dekorationsschicht (11) integral befestigt ist.

2. Schutzelement nach Anspruch 1, **dadurch gekennzeichnet, dass** die Dekorationsschicht (11) auf der zweiten Fläche (8) der transparenten Folie in einer kontinuierlichen oder nicht-kontinuierlichen Weise aufgebracht ist.

3. Schutzelement nach Anspruch 1 oder 2, **dadurch gekennzeichnet, dass** die Dekorationsschicht (11), die auf der zweiten Fläche der transparenten Folie aufgebracht ist, einfarbig ist und vorzugsweise dazu konfiguriert ist, der Farbe des Karosserieteils (3) zu entsprechen.

4. Schutzelement nach Anspruch 1 oder 2, **dadurch gekennzeichnet, dass** die Dekorationsschicht (11), die auf der zweiten Fläche der transparenten Folie aufgebracht ist, mehrfarbig ist und/oder Designs, Schriftzüge oder Logos aufweist.

5. Schutzelement nach einem der vorangehenden Ansprüche, **dadurch gekennzeichnet, dass** das wenigstens eine elektrische Verbindungselement (14) auf der Seite des elektrischen Widerstands (13) und damit seitlich an dem ersten Abschnitt (12) mittels Kleben oder Ultraschallschweißen oder mit einem anderen geeigneten Verfahren befestigt ist.

6. Schutzelement nach einem der vorangehenden Ansprüche, **dadurch gekennzeichnet, dass** der elektrische Widerstand (13) sich so erstreckt, dass er den ersten Abschnitt (12) der ersten Fläche (7) der transparenten Folie ganz oder teilweise bedeckt, wobei der elektrische Widerstand (13) aus der Gruppe ausgewählt ist, die besteht aus: Fäden (16) aus einem metallischen Leiter, vorzugsweise Kupfer oder dessen Legierungen, die direkt auf der ersten Fläche der transparenten Folie entsprechend einem Schlangen-, Gitter- oder Wabenmuster aufgebracht sind; einer durchgehenden oder nicht durchgehenden Schicht aus ITO; Kombinationen davon.

7. Verfahren zum Schutz eines an einem Fahrzeug installierten Strahlung aussendenden oder empfangenden Sensors (2), beispielsweise eines Radars oder einer Kamera, die an einem vorderen oder hinteren Fahrzeugkarosserieteil (3) installiert sind, **dadurch gekennzeichnet, dass** es die folgenden Schritte umfasst:
a)- Herstellen einer transparenten Folie (6) aus synthetischem Kunststoff, vorzugsweise Polycarbonat, in Form eines Blattes oder einer Bahn;
b)- Aufbringen eines elektrischen Widerstands (13) auf wenigstens einem ersten Abschnitt (12) einer ersten Fläche (7) der transparenten Folie mittels Metallabscheidung oder mittels Siebdruck oder mittels Klebstoff, so dass der elektrische Widerstand ein integraler Bestandteil der transparenten Folie wird;
c)- Aufbringen einer kontinuierlichen oder nicht-kontinuierlichen, einfarbigen oder mehrfarbigen Dekorationsschicht (11) auf einer zweiten Fläche (8) der transparenten Folie, mit möglichen Schriften oder Logos, die durch die transparente Folie lesbar sind;
d)- Vorformen der transparenten Folie (6) in einer ersten Form (18), um unnötige Randteile (19) zu beseitigen und ihr eine vorgegebene Form zu verleihen, die dazu konfiguriert ist, sich kontinuierlich mit dem vorderen oder hinteren Fahrzeugkarosserieteil zu verbinden;
e)- gemeinsames Formen, in einer zweiten Form (20) und auf der ersten Fläche (7) der transparenten Folie, eines Trägers (4) aus einem transparenten synthetischen Kunststoff oder einem für optische Strahlung oder Hochfrequenzstrahlung durchlässigen Material, um dem Träger (4) eine Form zu verleihen, die der der vorgeformten transparenten Folie (6) entspricht, und um auf dem Träger (4) Befestigungselemente (5) für das Fahrzeug auszubilden;
f)- vor oder nach den Schritten des Vorformens und/oder des gemeinsamen Formens, integrales Befestigen wenigstens eines elektrischen Verbindungselements (14) zu dem elektrischen Widerstand, das elektrisch und mechanisch mit diesem verbunden ist, auf der zweiten Fläche (8) der transparenten Folie (6);
g)- Montieren des somit erhaltenen Schutzelements (1) nach Anspruch 1 an dem Fahrzeugkarosserieteil (3), wobei der erste transparente Abschnitt (12) vor dem Sensor (2) bzw. diesem zugewandt angeordnet wird.

8. Fahrzeug, ein Schutzelement (1) für einen Strahlung aussendenden oder empfangenden Sensor (2) nach einem der Ansprüche 1 bis 6 umfassend, das vorzugsweise an einem vorderen oder hinteren Stoßfänger (3) über die gesamte Länge desselben, gemessen in einer Richtung quer zum Fahrzeug, angebracht ist.

## Revendications

1. Elément de protection (1) pour un capteur émetteur ou récepteur de rayonnement (2) installé sur un véhicule, par exemple un radar ou une caméra installée à une partie avant ou arrière de carrosserie de véhicule (3), comprenant un support (4) configuré pour être fixé à ladite partie de carrosserie de véhicule (3) devant le capteur émetteur ou récepteur (2) ; dans lequel, en combinaison :
i)- le support (4) est constitué intégralement d'un matériau plastique synthétique transparent ou néanmoins d'un matériau perméable aux rayonnements optiques ou aux fréquences radio ;
ii)- l'élément de protection comprend également un film transparent (6) délimité par une première face (7) et par une seconde face (8), à l'opposé de la première face, le film transparent (6) étant fixé entièrement d'un seul tenant à une première face (9) du support (4) orientée, en utilisation, vers le capteur émetteur ou récepteur (2) ;
iii)- la première face (7) du film transparent (6) étant orientée vers le support (4) et étant agencée pour adhérer au contact avec la première face (9) du support ;
iv)- la seconde face (8) du film transparent étant revêtue au moins partiellement d'une couche décorative (11) appliquée d'une manière permanente sur celle-ci ; et
v)- au moins une première portion (12) de la première face (7) du film transparent (6), configurée pour être agencée, en utilisation, orientée vers le capteur émetteur ou récepteur (2), est pourvue d'une résistance électrique (13) qui est formée entièrement d'un seul tenant sur celle-ci ; **caractérisé en ce que**
vi)- la seconde face (8) du film transparent est pourvue, à la première portion (12) de la première face (7) du film transparent, d'au moins un élément de liaison électrique (14) relié électriquement et mécaniquement à ladite résistance électrique (13), de préférence au moyen d'au moins un shunt (15) qui passe à travers ledit film transparent ;
vii)- ledit au moins un élément de liaison électrique (14) est fixé d'un seul tenant contre la seconde face (8) du film transparent (6) avec l'interposition de ladite couche décorative (11).

2. Elément de protection selon la revendication 1, **caractérisé en ce que** la couche décorative (11) est appliquée sur la seconde face (8) du film transparent d'une manière continue ou non continue.

3. Elément de protection selon la revendication 1 ou 2, **caractérisé en ce que** la couche décorative (11), appliquée sur la seconde face du film transparent, est monochrome et est configurée de préférence pour être assortie à la couleur de la partie de carrosserie de véhicule (3).

4. Elément de protection selon la revendication 1 ou 2, **caractérisé en ce que** la couche décorative (11), appliquée sur la seconde face du film transparent, est polychrome et/ou inclut des dessins, des inscriptions ou des logos.

5. Elément de protection selon l'une des revendications précédentes, **caractérisé en ce que** ledit au moins un élément de liaison électrique (14) est fixé sur le côté de ladite résistance électrique (13) et par conséquent latéralement à la première portion (12), par collage ou soudage par ultrasons ou avec un autre procédé approprié.

6. Elément de protection selon l'une des revendications précédentes, **caractérisé en ce que** ladite résistance électrique (13) s'étend pour couvrir l'intégralité ou une partie de ladite première portion (12) de la première face (7) du film transparent, la résistance électrique (13) étant choisie dans le groupe se composant de : filaments (16) constitués d'un conducteur métallique, de préférence du cuivre ou des alliages de celui-ci, déposé directement sur la première face du film transparent dans un motif en serpentin, en grille ou en peigne ; une couche continue ou non continue d'ITO ; des combinaisons de ceux-ci.

7. Méthode de protection d'un capteur émetteur ou récepteur de rayonnement (2) installé sur un véhicule, par exemple un radar ou une caméra installée à une partie avant ou arrière de carrosserie de véhicule (3), **caractérisée en ce qu'**elle comprend les étapes suivantes :
a)- la production d'un film transparent (6) constitué d'un matériau plastique synthétique, de préférence du polycarbonate, sous la forme d'une feuille ou d'une bande ;
b)- l'application, sur au moins une première portion (12) d'une première face (7) du film transparent, d'une résistance électrique (13) par dépôt de métal ou par sérigraphie ou par collage, de sorte que la résistance électrique devienne une partie intégrante du film transparent ;
c)- l'application, sur une seconde face (8) du film transparent, d'une couche décorative monochrome ou polychrome continue ou non continue (11), avec d'éventuels logos ou inscriptions lisibles à travers le film transparent ;
d)- la préformation du film transparent (6) dans un premier moule (18), de manière à éliminer des parties périphériques inutiles (19) de celui-ci, et à lui conférer une forme prédéfinie configurée pour se coupler de manière continue à ladite partie avant ou arrière de carrosserie de véhicule ;
e)- le co-moulage, dans un second moule (20) et sur la première face (7) du film transparent, d'un support (4) constitué d'un matériau plastique synthétique transparent ou d'un matériau perméable aux rayonnements optiques ou aux fréquences radio, de manière à conférer au support (4) une forme correspondant à celle du film transparent préformé (6) et de manière à produire, sur le support (4), des éléments de raccordement (5) au véhicule ;
f)- avant ou après les étapes de préformation et/ou de co-moulage, la fixation d'un seul tenant, à la seconde face (8) du film transparent (6), d'au moins un élément de liaison électrique (14) relié électriquement et mécaniquement à ladite résistance électrique ;
g)- l'assemblage de l'élément de protection (1) selon la revendication 1 ainsi obtenu d'un seul tenant sur la partie de carrosserie de véhicule (3), en agençant la première portion transparente (12) devant/ orientée vers ledit capteur (2).

8. Véhicule comprenant un élément de protection (1) pour un capteur émetteur ou récepteur de rayonnement (2) selon l'une des revendications 1 à 6, appliqué de préférence à un pare-chocs avant ou arrière (3) sur toute la longueur de celui-ci mesurée dans une direction transversale au véhicule.
